# EUROPEAN PATENT APPLICATION

(11) **EP 2 130 702 A1**
(43) Date of publication of application: **09.12.2009**
(21) Application number: 08753897.1
(22) Date of filing: 31.03.2008
(51) Int. Cl.: B60F 1/00, B60L 9/02, B60L 11/12, B61F 1/00

(54) **TRANSPORT MEANS**

(30) Priority: 29.03.2007 RU 2007111668
(71) Applicant: Zege, Sergei Olegovich, Moscow 125319 (RU)
(72) Inventor: Zege, Sergei Olegovich, Moscow 125319 (RU)
(74) Representative: Hansen, Anders Sandgaard
(86) International application number: PCT/RU2008/000194
(87) International publication number: WO 2008/121025

(57) **Abstract**

There has been proposed a transport vehicle designed to move in a self-contained transport system as well as on the automobile roads, comprising a frame consisting of a lower part, to which a plurality of wheels is secured, and of a top part comprising at least two arc-like curved rods to each of which electric rail drive units used as current collectors are connected in such a way that they are displaceable along a supporting current-conductive rail and along the arc-like curved rods.

## Description

This invention relates to transport systems and, in particular, to a transport vehicle which can be used in a self-contained transport system.

At present, one of the major problems for any city is a large number of motor transport vehicles individually used which leads to traffic congestion on the roads and environmental pollution. Moreover, constantly emerging traffic jams make it impossible for most people to keep to their schedule which is a source of great discomfort.

There is a known transport system in which transport vehicles run on electricity and move along guide lines designed for their wheels (see US patent No 6615740). However, this system has a number of drawbacks. Firstly, this system can be basically used only to move straight in an individual transport vehicle, since the design of the guide lines does not enable construction of road junctions (intersections) or even turns of more than 20 degrees. Secondly, in practice it is virtually impossible to accomplish a sharp rise or fall of the guide line, since it would lead to a significant loss of comfort. Consequently, this transport system could not be used in big cities where there is a need for a large number of road junctions (intersections), sharp turns and level changes.

There is another known transport system consisting of numerous transport vehicles that move along a monorail and can be joined together (see WO 99/65749). They can also move on the automobile roads. However, this system is not suitable for big cities with their road junctions (intersections) either, because it is impossible to switch transport vehicles from one monorail to another without human element being involved in the process, and it will lead to traffic congestion.

The object of the present invention is to eliminate the above mentioned drawbacks by designing a transport vehicle that can move both in a self-contained transport system and on the automobile roads.

According to the invention there has been created a transport vehicle designed to move in a self-contained transport system as well as on the automobile roads, comprising a frame consisting of a lower part, to which a plurality of wheels is secured, and of a top part comprising at least two arc-like curved rods to each of which electric rail drive units used as current collectors are connected in such a way that they are displaceable along a supporting current-conductive rail and along the arc-like curved rods.

Preferably, the wheels are secured to the frame in such a way that they are rotatable about the axis which is perpendicular to the lower part of the frame.

Preferably, the electric rail drive units used as current collectors are designed in such a way that they are displaceable along the arc-like curved rods in different directions and are rotatable about the axis normal to the arc of the circle along which the rods are curved.

Preferably, the wheels have individual electric drives running on batteries.

Preferably, parts of the transport vehicle's body are secured to the arc-like curved rods so that they are movable along them and form the side surface of the cylinder, wherein the bases of the cylinder are formed by the arc-like curved rods

Preferably, the transport vehicle has a heat source of power with a generator which is fixed to the transport vehicle by means of the electric rail drive units used as current collectors, which are displaced at an angle of at least 20 degrees relative to the vertical axis in the direction opposite to the general movement of the transport vehicle.

Below, the invention is described in more detail with reference to the accompanying drawings, in which:
Figure 1 is a side view in section of the transport vehicle according to the present invention;
Figure 2 is a front view of the transport vehicle according to the present invention, in section to the line 1-1 in Figure 1;
Figure 3 is an illustration of the transport vehicle moving in a self-contained transport system with levels changed according to the present invention.

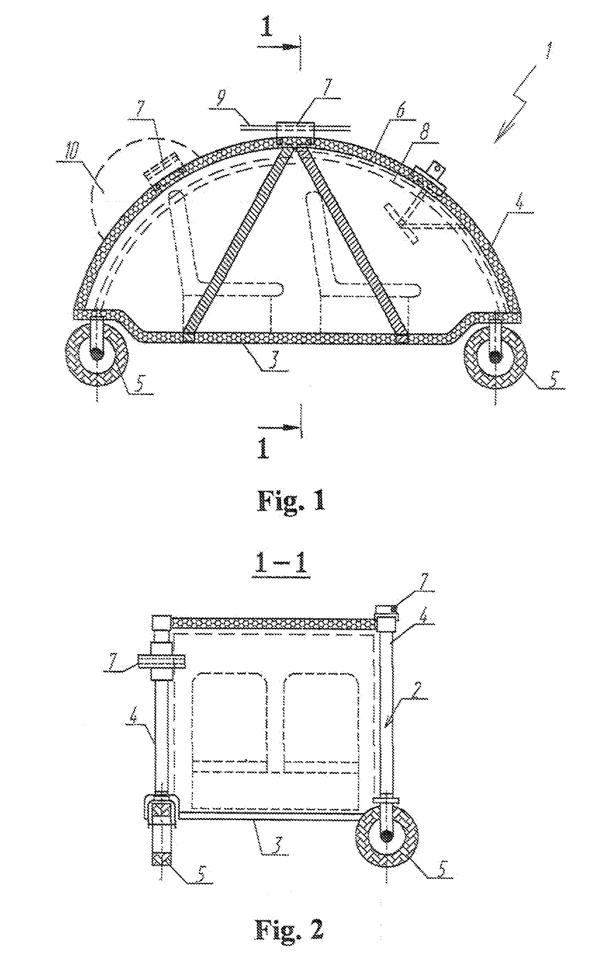

The transport vehicle shown in Figures 1-3 is mainly meant to be used in a self-contained transport system, if required, it can also be used outside this system, i.e. on the automobile roads.

The urban self-contained electrified automatic system, in which the proposed transport vehicle moves, also comprises transport infrastructure equipped with supporting current-conductive rails, a computer-aided controlling system, and, if required, storage facilities, embarkation and disembarkation terminals, and terminals enabling the transport vehicle to join the transport system and to leave it.

Figure 1 shows that the transport vehicle 1 comprises a frame 2 consisting of a lower part 3 and a top part 4. The lower part 3 is virtually a flat understructure to which wheels 5 are secured. The wheels 5 are secured to the frame in such a way that they can rotate on their axis to ensure the movement of the transport vehicle 1 and on the axis which is perpendicular to the lower part 3 of the frame to ensure the turning of the transport vehicle 1. The top part 2 is firmly fixed to the lower part 3 and comprises at least two arc-like curved rods 6.

Both rods 6 have rail drive units used as current collectors 7, which, for instance, can also serve as electric motors, in order to move the transport vehicle 1 along the supporting guide rails. The rail drive units 7 can move along the rods 6 in both directions and along the supporting rails of the self-contained transport system.

Moreover, the rail drive units 7 can rotate on their axis, which is perpendicular to the circular arc along which the rods 6 are curved, to ensure the turning of the transport vehicle 1.

Parts 8 of the transport vehicle's body can be fixed to the upper part 4 of the frame 2 of the transport vehicle 1 and form its "roof"; parts 8 also constitute the side surface of the cylinder, the bases of which are formed by the arc-like curved rods 6.

The transport vehicle functions in the following way.

While a rectilinear horizontal movement of the transport vehicle 1 in the self-contained transport system, the transport vehicle 1 is set in such a way that all its wheels 5 have simultaneous power contact with the pavement of the transport structures and its rail drive units 7 are in their upper position in contact with the supporting rails 9 of the transport system. When a signal to start movement is given the rail drive units move on the supporting rails and set in motion the transport vehicle 1 which rolls on its wheels 5.

To carry out a turn on the horizontal plane the transport vehicle 1 is moved by only one rail drive unit 7, the one which is in its upper position on the side of the action (the right one while turning to the right and the left one while turning to the left). At the same moment, the other rail drive unit is removed from the supporting rail.

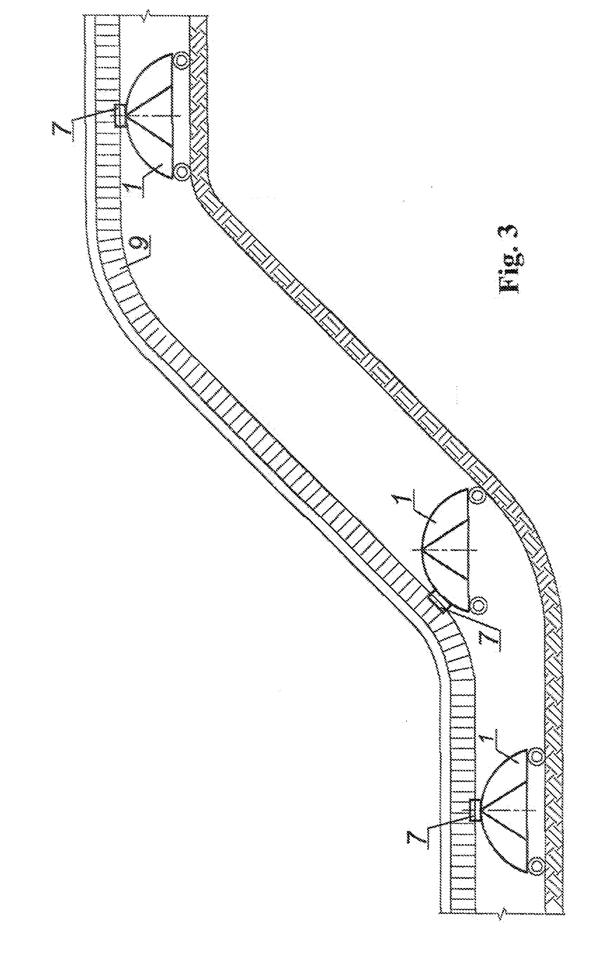

To shift levels following the change in the level of the supporting rail as shown in Figure 3, the two rail drive units 7 move along the curved supporting rails. They simultaneously move along the arc-like curved rods 6, keeping the transport vehicle 1 in a horizontal position. This additional movement is carried out in the direction of the front of the transport vehicle 1 while its descent and in the direction of its rear end while its ascent. At the same time the transport vehicle moves on only one pair of its wheels. It is the front pair while its ascent and the rear pair while its descent.

If required, the transport vehicle 1 can be used outside the self-contained transport system. It moves on the roads in the same way as an automobile, its wheels being moved turned by an electric motor. According to the invention, the transport vehicle is an all-wheel drive vehicle, and the self-contained transport system using this transport vehicle is compatible with the city's infrastructure and becomes its integrated part. There can be entrance drives joining the city's streets to the self-contained transport system, its segments and parking lots.

To move outside the transport system, the transport vehicle can be equipped with a generator block running on a heat-engine or an alternative source 10 of energy. The generator block is electrically connected to the other systems of the transport vehicle through the rail drive units which are set at an angle of at least 20 degrees to the vertical axis in the direction opposite the main direction of the movement of the transport vehicle which is mainly forward.

While moving in the transport system the transport vehicle 1 can consume electricity as well accumulate it in its batteries. It can be used for different purposes and is controlled by the computer-aided system. The rail drive units are both charging and return units.

When the rail drive units are switched off, the transport vehicle runs on batteries and can move lengthwise and sideways on its wheels. Due to their greater than average mobility the transport vehicle can use the parking space more efficiently. Parking lots can also be equipped with supplementary charging units.

## Claims

1. A transport vehicle designed to move in a self-contained transport system as well as on the automobile roads, comprising a frame consisting of a lower part, to which a plurality of wheels is secured, and of a top part comprising at least two arc-like curved rods to each of which electric rail drive units used as current collectors are connected in such a way that they are displaceable along a supporting current-conductive rail and along the arc-like curved rods.

2. The transport vehicle according to claim 1, wherein the wheels are secured to the frame in such a way that they are rotatable about the axis which is perpendicular to the lower part of the frame.

3. The transport vehicle according to claim 1, wherein the electric rail drive units used as current collectors are designed in such a way that they are displaceable along the arc-like curved rods in different directions and are rotatable about the axis normal to the arc of the circle along which the rods are curved.

4. The transport vehicle according to claim 1, wherein the wheels have individual electric drives running on batteries.

5. The transport vehicle according to claim 1, having parts of its body secured to the arc-like curved rods so that they are movable along them and form the side surface of the cylinder, wherein the bases of the cylinder are formed by the arc-like curved rods.

6. The transport vehicle according to claim 1, having a heat source of power with a generator which is fixed to the transport vehicle by means of the electric rail drive units used as current collectors, which are displaced at an angle of at least 20 degrees relative to the vertical axis in the direction opposite to the general movement of the transport vehicle.
